# EUROPEAN PATENT APPLICATION

(11) **EP 2 811 600 A2**
(43) Date of publication of application: **10.12.2014**
(21) Application number: 14170986.5
(22) Date of filing: 03.06.2014
(51) Int. Cl.: H02G 3/18, A47B 21/06

(54) **Power and/or data connection apparatus**

(30) Priority: 03.06.2013 GB 201309834; 14.11.2013 GB 201320132
(71) Applicant: Office Electrics Limited, Wakefield, Yorkshire WF2 7AL (GB)
(72) Inventor: Hobbs, Timothy Richard, Wakefield, Yorkshire WF2 7AL (GB)
(74) Representative: Stephenson, Philip

(57) **Abstract**

The invention provides apparatus for the provision of power and/or data cable connections. The apparatus includes a power and/or data connection assembly, and a movement assembly which includes a biasing means, having a first end connected at a fixed location with respect to which the power and/or data connection assembly is provided to be moved and a second end located with the power and/or data connection assembly. When the power and/or data connection assembly is in a first, storage position and is released from engagement means, the relative movement between the respective ends of the biasing means causes the power and/or data connection assembly to be moved from the first position to a second access position. In one embodiment the apparatus includes at least one connection or charging means which is available for use when the power and/or data connection assembly is in the first storage position.

## Description

The invention to which the application relates is apparatus which can be used to provide the management of power and/or data cables, hereinafter referred to as cables, and connectors therefore, at a particular location such as, for example, a desk, bench or table at which a person sits, stands or works such as, for example, in an office, kitchen or a laboratory. Furthermore, the apparatus allows access to the power and/or data, typically via one, or a plurality of, sockets into which a plug can be placed to access power supply or data connection.

It is well known to provide apparatus of the type described above and, in one arrangement, the apparatus can be mounted on a top surface of the desk, on a side wall of the same or on a wall adjacent to which the desk is positioned. However, the problem with this known form of apparatus is that the passage of the cables to and from the same can be unsightly, can cause the cables to become tangled and, when mounted on the desk, can take up space which otherwise would be used for work purposes.

An alternative form of the apparatus is to provide the same so as to be moveable between first and second positions, with the first position being a storage position in which the apparatus is withdrawn from the said work surface of the desk and a second in-use position in which the plugs, sockets and cable connections are exposed for access.

The movement of the apparatus between the said first and second positions can either be achieved manually or is achieved by the user releasing one or more engagement means so as to allow a biasing means such as a coil spring to extend along it's longitudinal axis to exert a movement action on the apparatus to move the same from the first to the second position. In order to move the apparatus back to the first position, the user applies a manual force to act against the spring force and engages engagement means so as to retain the apparatus in the first position.

A problem with this known form of apparatus is that the spring which is used, has a first end which acts on the lower portion of the apparatus to move the same to the second position, and the opposing second end of the spring is required to act against a stationery surface so as to provide the force to move the apparatus relative thereto. This stationery surface is typically either provided by an additional portion of the desk against which the spring can act but, more typically, is provided in the form of a housing in which the apparatus is located and is moveable with respect thereto, with the housing, in turn, being secured in a fixed position with respect to the desk.

The provision of the housing, while allowing the spring action to operate correctly, adds significant bulk in terms of the size of the overall assembly which has to be installed and which, in turn, means that additional expense is incurred in the manufacture of the same due to the additional components and the size can limit the potential use of the same.

In any case the apparatus is typically provided with a lid portion that is accessible from a top surface of the desk or work surface when the apparatus is in the storage position and which can be used to release and/or lift the apparatus from the storage position to the access position and/or the lid houses user actuation means for allowing release of a movement mechanism to move the apparatus from the storage position to the access position.

A problem which is experienced when the lid is used as the means for movement of the apparatus is that available space is restricted, typically due to the provision of gripping means and/or a handle and/or user actuation means. Furthermore when the apparatus is in the storage position the sockets are located below the surface of the table or desk and cannot be easily accessed for use.

A first aim of the present invention is to provide apparatus for the provision of power and/or data cable connections which can be moved from a storage to an in-use position, with respect to an item such as a desk, in a manner which is equally, and preferably more effective than the conventional systems whilst, at the same time, reducing the size of the same and/or cost of manufacture of the same.

A further aim of the invention is to provide power and/or data connection apparatus that allows some functionality to be provided to the apparatus whilst the apparatus is in the storage position.

In a first aspect of the invention there is provided apparatus for the provision of power and/or data cable connections, said apparatus including a power and/or data connection assembly, and a movement assembly, said movement assembly including a biasing means, having a first end connected at a fixed location with respect to which the power and/or data connection assembly is provided to be moved and a second end located with the power and/or data connection assembly and wherein, when the power and/or data connection assembly in a first position, is released from engagement means, the relative movement between the respective ends of the biasing means causes the power and/or data connection assembly to be moved from the first position to a second position.

Typically, the power and/or data connection assembly is moved to the first position by being pushed against the force of the biasing means which is caused to uncoil as the distance between the respective ends of the same, increases. The assembly is then engaged to retain the same in this position. When the said assembly is moved from the first position to the second position, with the engagement means having been released, the biasing means coils up as the distance between the respective ends reduces.

By providing the biasing means in this form, there is no need for the same to act on a surface beneath the said apparatus in order to enable the movement force to be generated. Rather, and typically, the free end of the biasing means, is connected to the movement assembly at a location which is intermediate the respective ends of the power and/or data connection assembly with respect to the axis along which the assembly is to be moved between the first and second positions. This therefore significantly reduces the overall size of the apparatus in comparison to the prior art as no exterior housing is required to be provided.

In one embodiment, the movement of the power and/or data connection assembly between the first and second positions is a linear movement or, in an alternative embodiment, the movement which is created, is a pivotal movement. Typically, the direction of movement and form of movement is controlled by guide means between the power and/or data connection assembly and the movement assembly.

Typically the movement assembly is located in a fixed position with respect to a further item, such as an item of furniture. Typically the biasing means used is a constant force spring or a clock spring.

In one embodiment the power and/or data connection assembly includes sockets to allow both power and data connections to be made when the apparatus is in the second position and includes cable leading thereto.

In one embodiment, the apparatus is held in the first position via engagement means which can be accessed by a user in order to release the same and allow the apparatus to then automatically move under the force of the biasing means to the second position.

In one embodiment, the assembly includes damping means which contact with the apparatus as the same moves to the second position in order to control the speed and force of movement.

In one embodiment the apparatus includes an external portion which is connected to, or provided integrally with, the power and/or data connection assembly, and moves with the said assembly between the first and second positions.

Typically when the power and/or data connection assembly is in the first position at least one face of the external portion is accessible for use at an external surface of the item of furniture to which the apparatus is fitted.

In one embodiment the said external portion has means for providing an electrical charge to one or more devices connected thereto or within a charging range thereof when the said assembly is in the first position thereby allowing the power and/or data connection assembly to still have some functionality when in the first position.

In one embodiment the external portion has at least one socket to allow the connection of a suitable plug, such as a USB plug to allow the charging and/or data connection of a device connected to the plug. In addition or alternatively the external portion is provided and connected such as to provide a wireless charging effect such as by magnetic resonance charging.

Typically the said further power and/or data socket and/or wireless charging transmitter are provided in the external portion which in turn is located so as to form an end of the power and/or data connection assembly.

Typically the said face of the external portion with the power and/or data socket lies at, or adjacent to, the top surface of an item of furniture to which the apparatus is fitted, when the power and/or data connection assembly is in the first, storage position.

According to a further aspect of the invention there is provided power and/or data connection apparatus, said apparatus including an assembly, movement means allowing movement of the assembly between storage and access positions, at least one power and/or data socket located with respect to a face of the assembly and characterised in that at least one further power and/or data socket and/or a magnetic induction or magnetic resonance wireless charging transmitter is located with respect to a further face of the assembly so as to be accessed by the user when the housing is in both the storage and access positions.

Typically the assembly is moveable between the storage and access positions along a substantially linear axis. Typically the said further power and/or data socket and/or wireless charging transmitter is located on the face of the assembly which forms an end of the same.

Typically the said face with the further power and/or data socket and/or wireless charging transmitter lies at, or adjacent to, the top surface of an item of furniture to which the apparatus is fitted, when the assembly is in the storage position.

Thus, the present invention provides apparatus with one or more power and/or data connection sockets that are arranged in a conventional manner along a side face of the housing so as to be relatively easily accessible to a user when the housing is in the access position and also has one or more further data and/or power sockets and/or a magnetic induction or magnetic resonance wireless charging transmitter, which are located with respect to a different face of the housing so as to always be relatively easily accessible to the user. This means that the user always has at least one power and/or data socket and/or the capability to charge devices such as mobile phones by wireless power, readily available to them irrespective of the position of the housing.

In one embodiment the power and/or data connection apparatus is located in, or associated with, a worktop of an item of furniture and when the assembly is located in the storage position, the power and/or data sockets on the side face of the assembly are located below an upper surface of the worktop and when the assembly is in access position, the power and/or data sockets on the side wall are located above the upper surface of the worktop to allow user access. In accordance with the invention the further power and/or data sockets and/or wireless charging transmitter are preferably located with respect to the face of the assembly which is accessible to a user from above the upper surface of the worktop in both the first and second positions of the assembly.

In one embodiment the face which is accessible at all times can be referred to as the external portion and acts as a lid for the apparatus. In one embodiment this lid covers an end of the assembly and/or is gripped or includes a handle and/or engagement means to allow movement of the assembly between the storage and access positions.

The lid can be any suitable shape, design and/or dimensions. For example the lid or top member can be substantially dome shaped, hemispherical, circular, triangular prism in shape, substantially flat, concave in shape, convex in shape and/or the like.

The lid member can protrude above an upper surface of the worktop in use, can be substantially flush with an upper surface of the worktop in use or can be recessed below an upper surface of the worktop in use. In the latter arrangement, the further power and/or data socket and/or wireless charging transmitter are provided on or associated with the lid in such a way as to still remain accessible to a user.

In one embodiment the said further power and/or data socket is a 2 port USB charging socket but it should be appreciated that any number, type, lay-out, dimensioned, design and/or the like of the further power and/or data connection means can be provided.

In one embodiment the said wireless charging transmitter which may be of the magnetic induction or magnetic resonance design may have a flat surface or other features for the location of the device to be charged.

In one embodiment a protective cover can be provided on or associated with the further power and/or data socket to prevent dirt, moisture and/or the like from entering the power and/or data connection socket when not in use.

Preferably the cover means are movably mounted to allow movement of the same between a protecting and an open position. The cover means can be slidably mounted, rotatable mounted, pivotably mounted, hingedly mounted and/or the like.

The movement means of the apparatus can be any suitable means for allowing movement of the power and/or data connection assembly between the first and second positions. For example the movement means can include any or any combination of a rotational mechanism, pivotal mechanism, sliding mechanism, manual movement mechanism, resilient biasing mechanism and/or the like.

In one embodiment actuation means for allowing user actuation of the movement means is provided on the lid or top member in addition to the further power and/or data socket. The user actuation means can include any or any combination of one or more handles, gripping portions, buttons, switches, sliders and/or the like.

The worktop can be in the form of a desk, table, worksurface and/or the like.

According to a further aspect of the present invention there is provided power and/or data connection apparatus for location with a worktop of an item of furniture, said apparatus including an assembly having power and/or data connection sockets located along a first face thereof and at least one further power and/or data connection means and/or wireless charging transmitter located on a second face of the assembly, said assembly movable between a first, storage, position and a second, access position, such that the power and/or data sockets located on the first face of the assembly are located substantially internally of the item of furniture when the assembly is in the storage position and externally of the item of furniture when the assembly is in the access position and characterised in that the further power and/or data connection means and/ or wireless charging transmitter located on the second face of the housing are accessible from externally of the item of furniture when the housing is in both the storage and access positions.

Specific embodiments of the invention are now described with reference to the accompanying drawings wherein;
Figures 1a and b illustrate apparatus in accordance with one embodiment of the invention in first and second positions;
Figure 2 illustrates the apparatus of Figure 1 in cross-section in the first position;
Figure 3 illustrates one embodiment of engagement means in accordance with the invention;
Figures 4a-b show a front view and a side view respectively of power and/or data connection apparatus according to a further embodiment of the present invention when in a storage position.
Figures 5a-b show a front view and a side view respectively of the power and/or data connection apparatus of figures 4a-b when in an access position;
Figures 6a-c show perspective views of the lid member in figures 4a-5b with a cover in a fully closed position, a partially open position and a fully open position respectively;
Figures 7a and b shows a perspective view of the lid member in figures 6a-b when the apparatus is in the storage position and with a cover in a fully open position to allow connection of a power or data cable;
Figures 8a-b show perspective views of two embodiments of the lid member when the apparatus is in the storage position with alternative means illustrated to allow the release of a movement mechanism to allow movement of the assembly between the storage and access positions;
Figures 9a-b show perspective views of the lid member, with a handle according to an embodiment of the present invention, with the handle in a closed position and an open position respectively;
Figure 10 shows a perspective view of the apparatus in one embodiment with the assembly in an access position;
Figures 11a-c illustrates views of apparatus in accordance with a further embodiment of the invention in an access position;
Figures 12a-d illustrate the apparatus of Figures 11a-c in the storage position;
Figure 13 illustrates a lid of the power and/or data connection assembly in connection with a power supply cable.

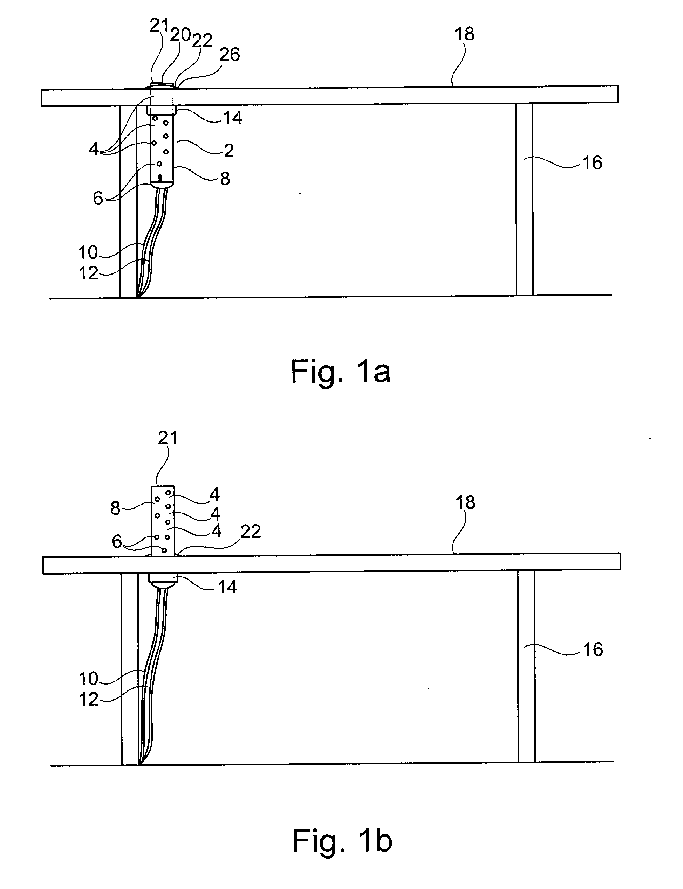

Referring now to the Figures 1-3c there is provided apparatus 2 which in this embodiment includes three plug sockets 4 and two data connection sockets 6 provided as part of a power and data connection assembly 8 in which the said sockets are located and also connected to power and data cables 10, 12 respectively so as to allow the power and data to be connected to the apparatus.

In accordance with the invention, the power and/or data connection assembly 8 can be moved between a first, storage, position as shown in Figure 1a, and a second, in-use or access, position as shown in Figure 1b. The movement is achieved via a movement assembly 14 which is provided in a fixed location with respect to, in this case, an item of furniture in the form of a desk 16. It will therefore be seen that in the second position, the power and data connection assembly 8 is raised above the top surface 18 of the desk and, in the first position, is located with all but the face 20 of an external portion or lid 21, positioned below the top surface of the desk and effectively within the item of furniture thereby leaving the top surface of the desk clear when the apparatus is not required for use.

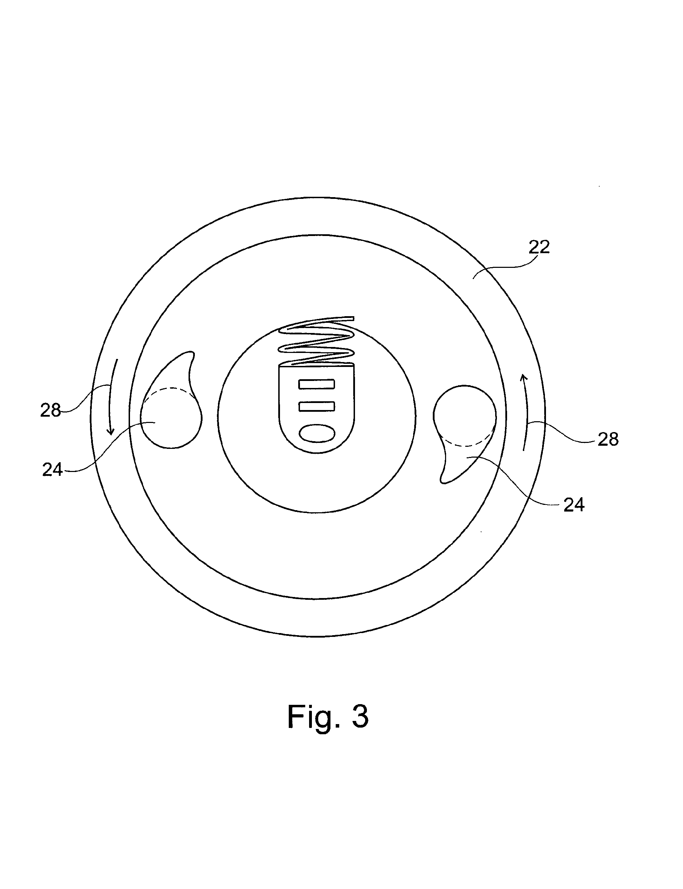

Engagement means 22 are shown in Figure 3 and can be provided, in this embodiment, with rotatable portions 24. When the engagement means are engaged, the power and data connection assembly 8 is retained in the first, storage position and, when released, the power and data connection assembly is released to move from the first storage position to the second, access, position. In this case, the engagement means are mounted at an accessible location 26 for the user of the apparatus on the top surface 18 of the desk and rotation of the same, as indicated by arrows 28, allows the respective release or engagement of the power and/or data connection assembly 8. It should be appreciated that other forms of engagement means can be used.

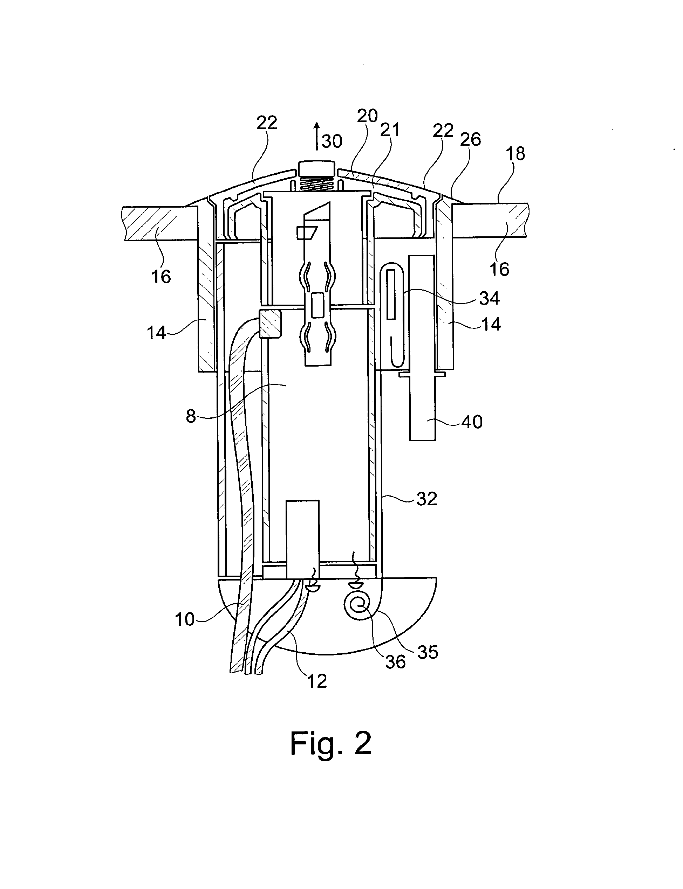

When the power and/or data connection assembly 8 is released from the engaged position the same will automatically move as indicated by arrow 30 in Figure 2, towards the second position under the influence of a spring 32 which has a first end 34 attached at a fixed location on the movement assembly 14, as shown and therefore is fixed with regard to the desk 16, and a second end 36 which is located with the power and/or data connection assembly 8. The degree of coil 38 of the spring 32 and/or the resilience of the material from which the spring is made, determines the movement force acting on the power and/or data connection assembly 8 and it will therefore be appreciated that when the assembly is in the first position as shown in Figures 1a and 2, the degree of coil will be less than when the power and/or data connection assembly 8 has been moved under the influence of the spring 32 to the second position shown in Figure 1b, as the spring 32 attempts to coil up during this movement direction and therefore effectively pulls the power and/or data connection assembly from the first position to the second position as the spring coils.

As the power and/or data connection assembly moves to the second position, so the same will contact with damping means 40 which, whilst still allowing movement of the power and/or data connecting assembly to the second position, controls the speed and force of movement of the same to be within acceptable speed and force over at least the last part of the travel of the power and/or data connection assembly to the second position so as to provide smooth and relatively shock free and/or noise free movement.

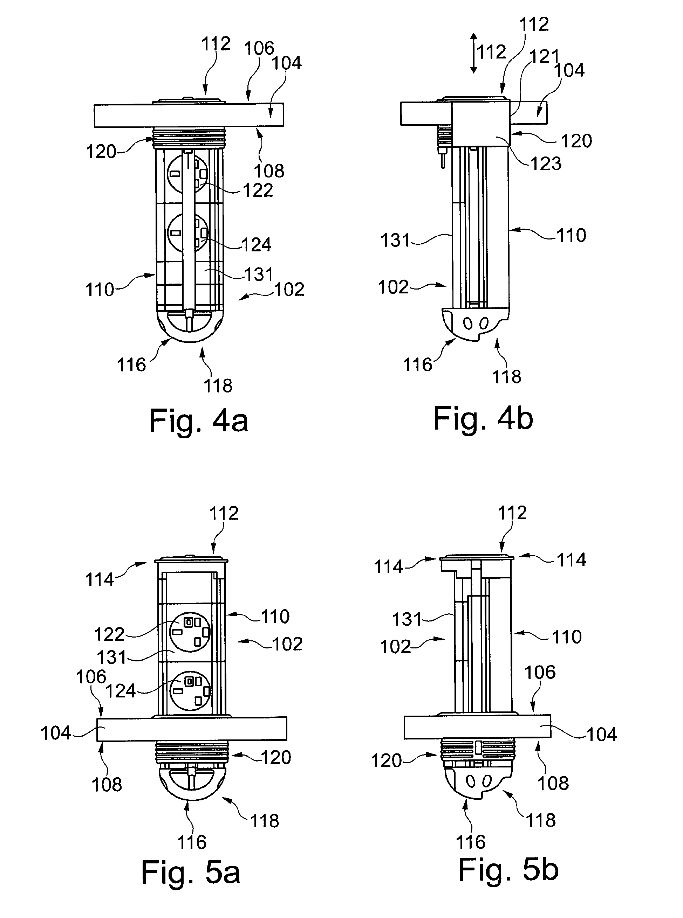

Referring now to figures 4a-b, 5a-b and 10, there is shown power and data connection apparatus 102 in another embodiment for location in a worktop 104 of an item of furniture such as a desk. The worktop 104 has an upper surface 106 and a lower surface 108.

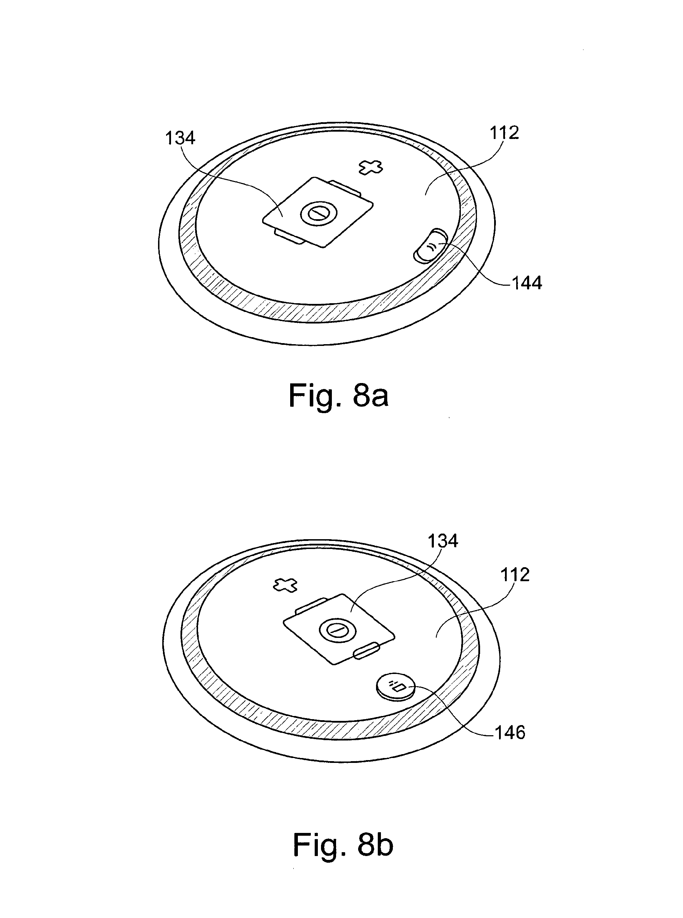

The apparatus 102 includes an assembly 110 which includes an external portion or lid member 112 at a first end 114 and a base 116 located at the opposing end 118 of the assembly. The apparatus includes a locating frame 120 with a screw thread arrangement as one method of allowing the apparatus to be located within an aperture 121 formed in the worktop and the frame has an aperture 123 illustrated in Figure 4b, through which the housing can be moved in the direction of arrow 125, to allow the assembly to be selectively moved between a storage position, as shown in figures 4a-b and an access position as shown in figures 5a-b and 8.

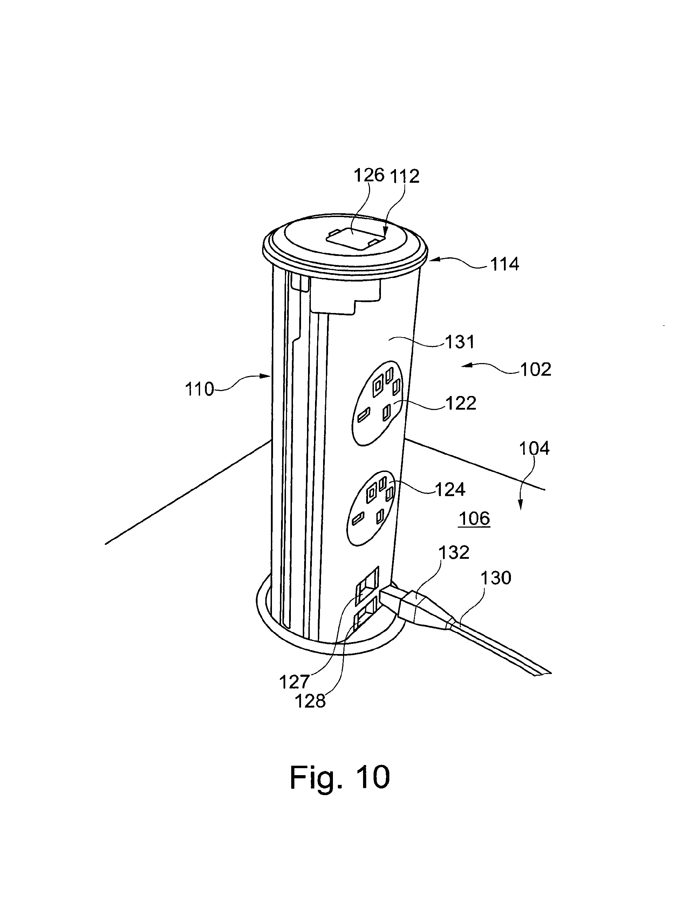

With the power and/or data connection assembly 110 in the storage position as shown in Figures 4a-b, the majority of the power and/or data connection assembly is located substantially below the upper surface of the worktop 104 and within the item of furniture and this includes the power and/or data sockets 122, 124 located on the side face 131 of the assembly so that access to these sockets from externally of the item of furniture is substantially hindered or prevented. Further data connection or charging sockets can be provided, such as shown in Figure 10 with sockets 127, 128. With the housing 110 in the access position shown in Figures 5a-b the sockets 122, 124, 127, 128 are located substantially above upper surface 106 of worktop 104 and user access to the same can be easily achieved as is shown in Figure 10 with the data cable 130 and connector 132 being connected to data connection port 127 or 128.

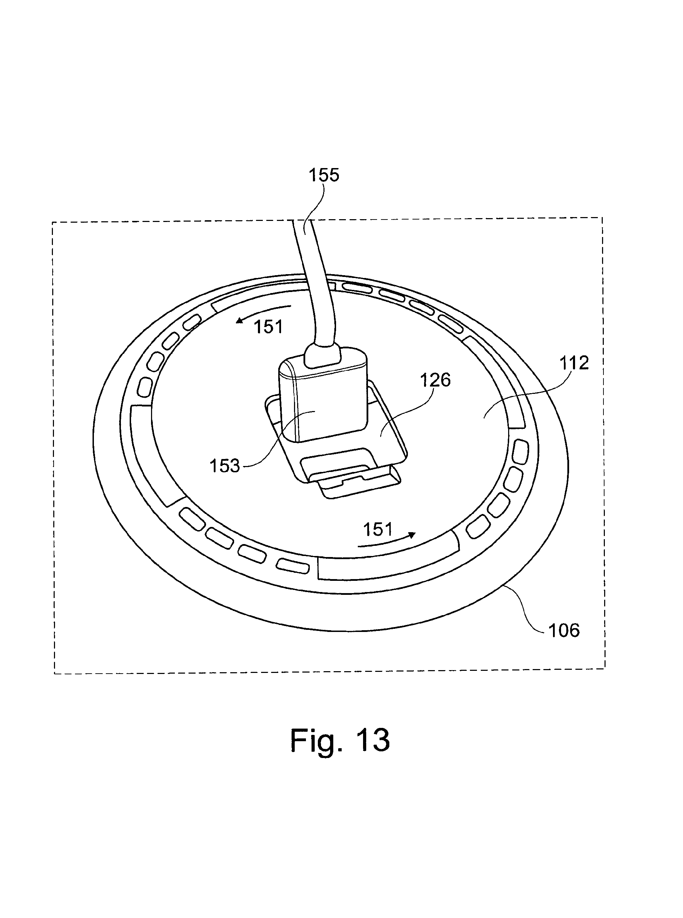

In accordance with this aspect of the invention the assembly includes at least one further means for providing power for use and/or charging and/or data connection. In one arrangement hence allow movement of the assembly 110 to the access position are provided on or adjacent to the lid member 112. Figure 13 illustrates the connector 126 in association with a plug 153 of a cable 155.

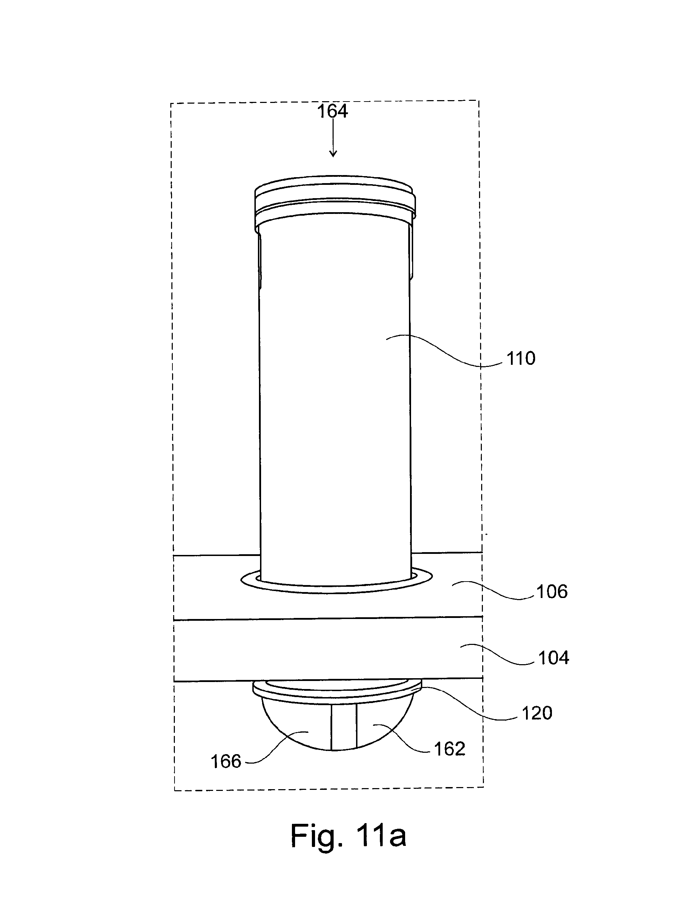

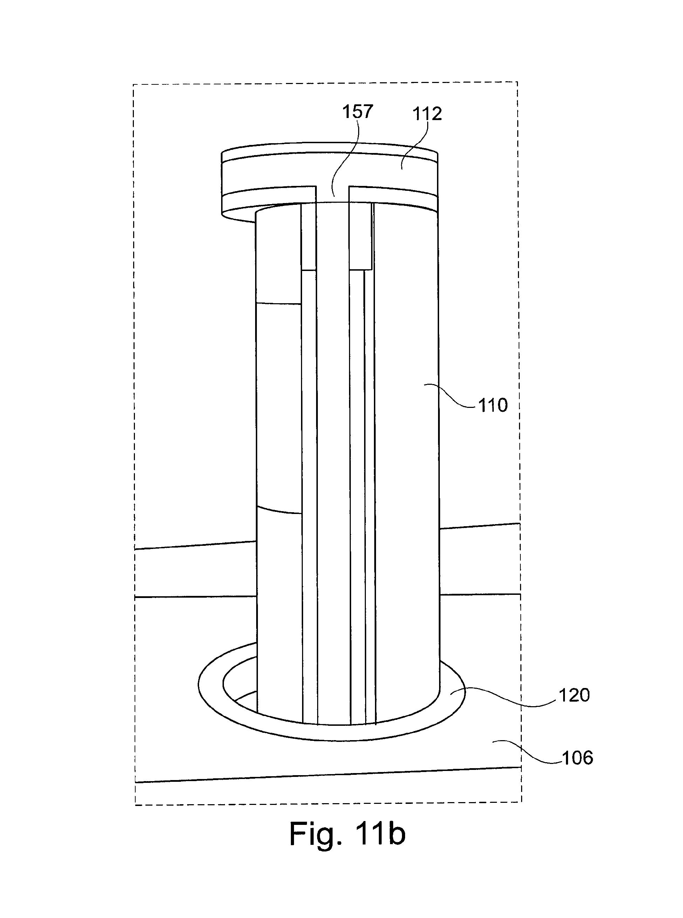

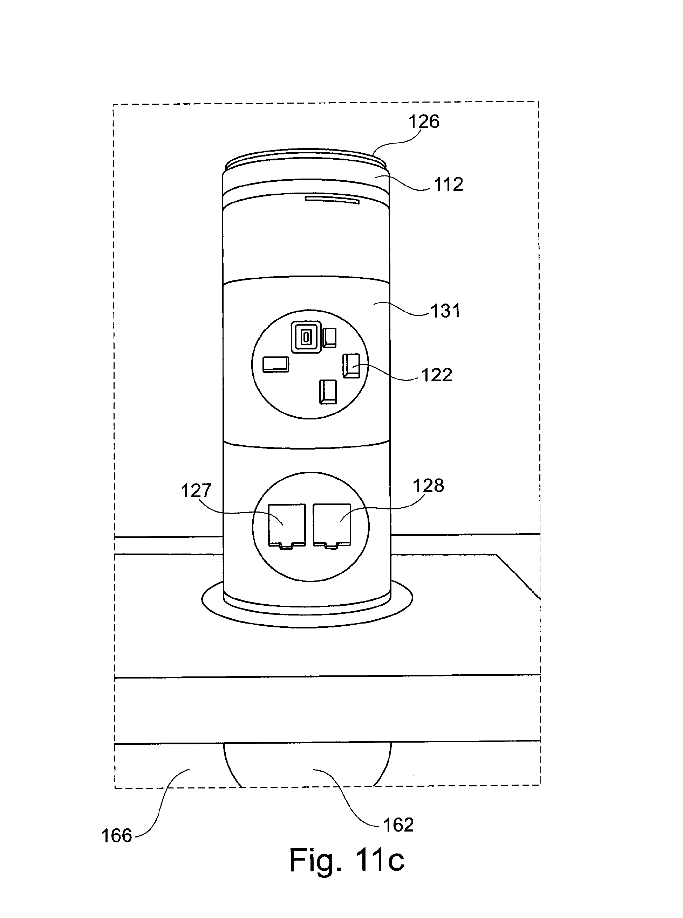

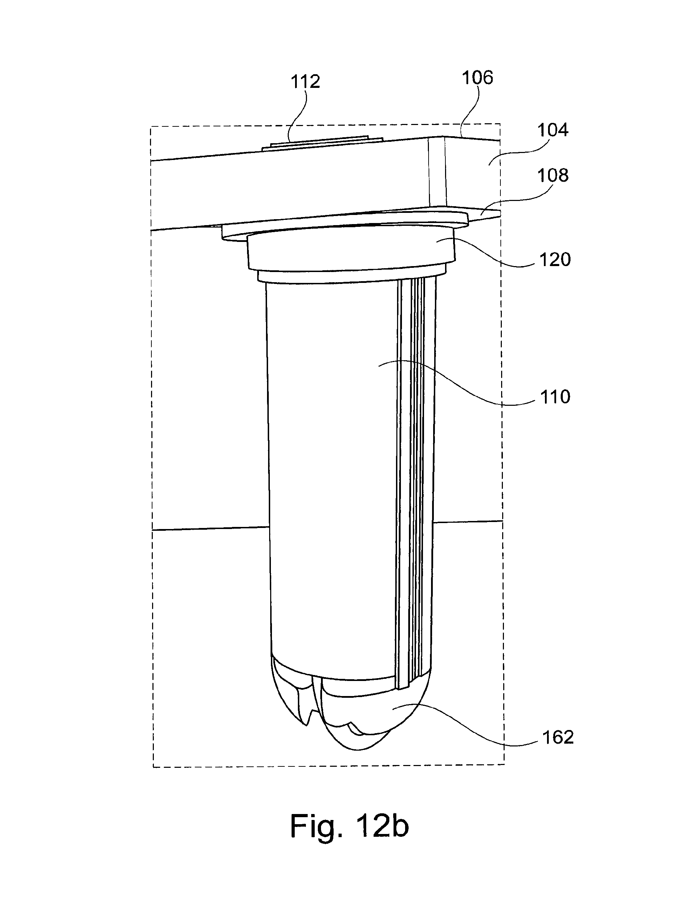

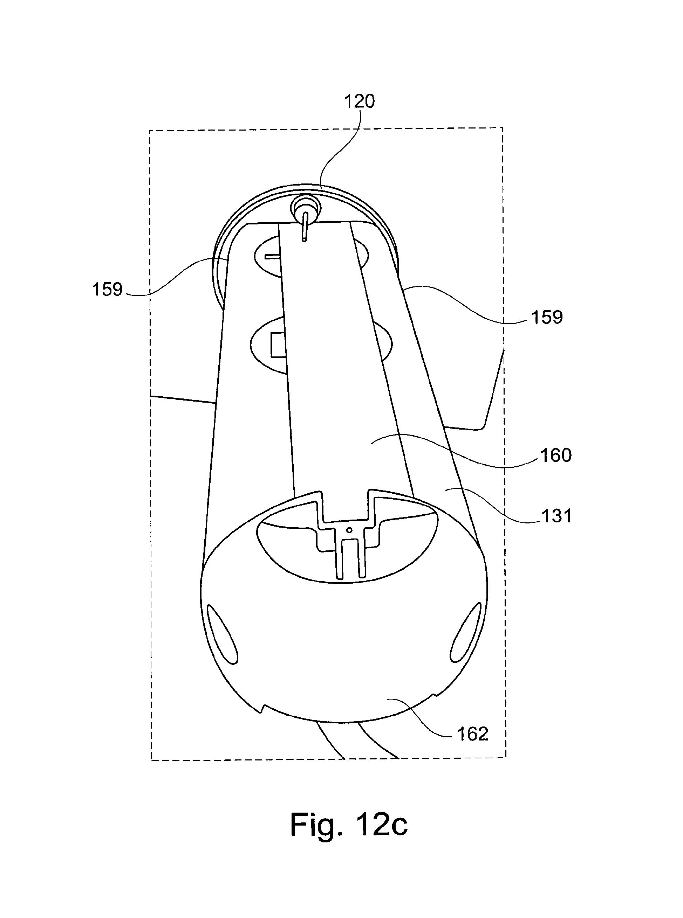

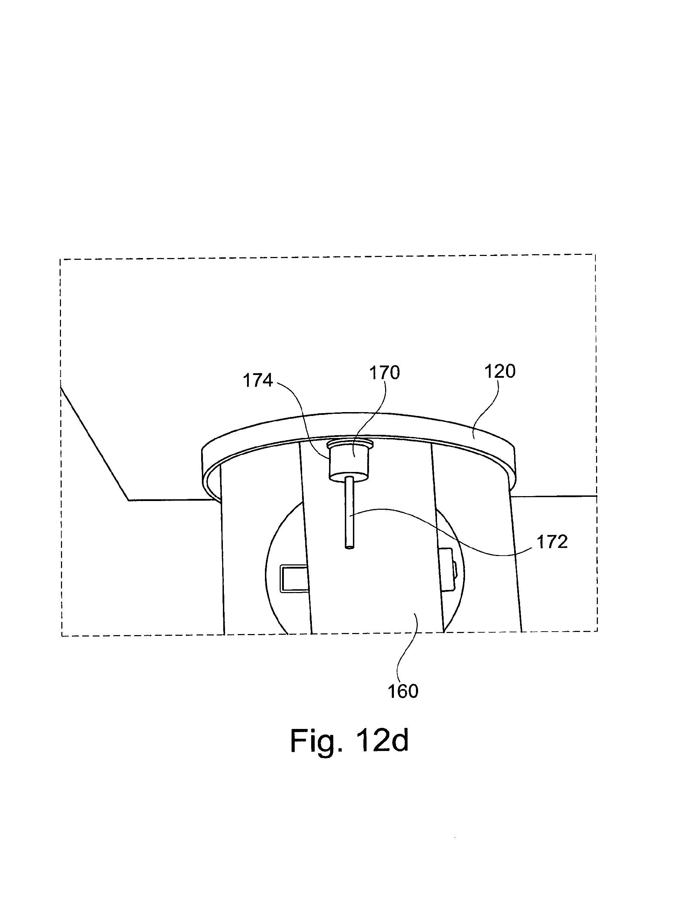

In the embodiment, shown in figure 8a, user actuation means in the form of a slider button 144 is provided to actuate the movement mechanism of the apparatus. Button 144 is slidably movable between a first actuated position and a second non-actuated position to allow actuation of the movement means for the assembly 110 between the storage and access positions respectively. In the embodiment shown in figure 8b, user actuation means in the form of a press button 146 is provided to actuate the movement mechanism of the apparatus. Yet further, in Figures 11-13 a further engagement means is described in which the lid member 112 can be rotated as indicated by arrows 151 with respect to the worktop surface 106. This rotation serves to release clips 157 provided on the underside of the lid 112 shown in Figure 11b from retaining means 159 provided on the locating frame 120 as shown in Figure 12c. Once released the influence of the movement spring 160 which is the same as the spring 32 of Figures 1-3 is free to coil up and as it does so causes the assembly 110 to move up to the access position. Typically, the lid mechanism is biased towards the engaging position such that when the same has been rotated to release the parts 157, 159, the lid is retuned by biasing means to an engaging position such that when the assembly 110 is pushed down from the access position to the storage position, the parts 157, 159 automatically engage to thereby retain the assembly 110 in the storage position.

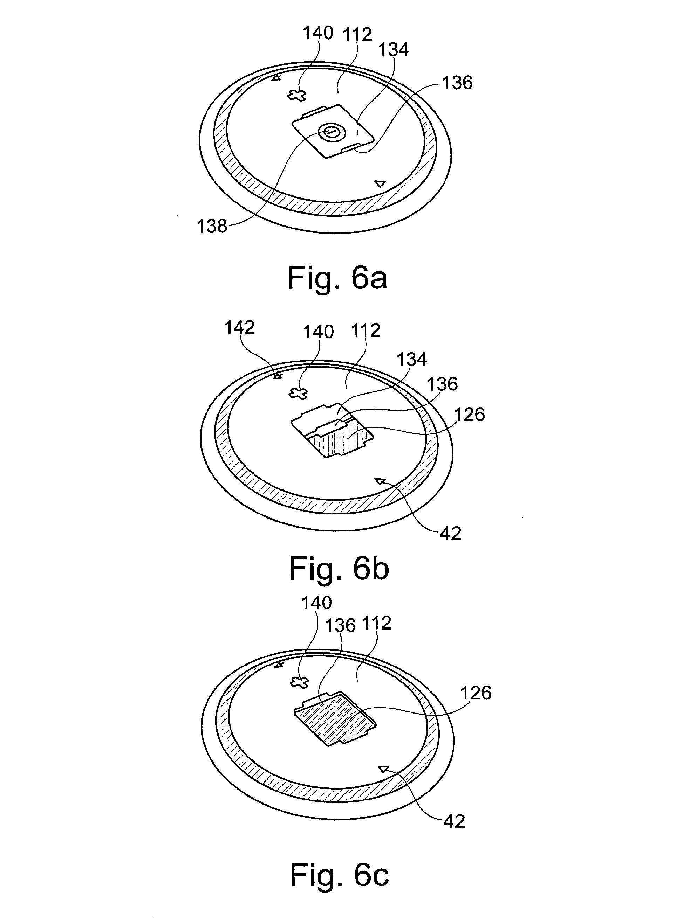

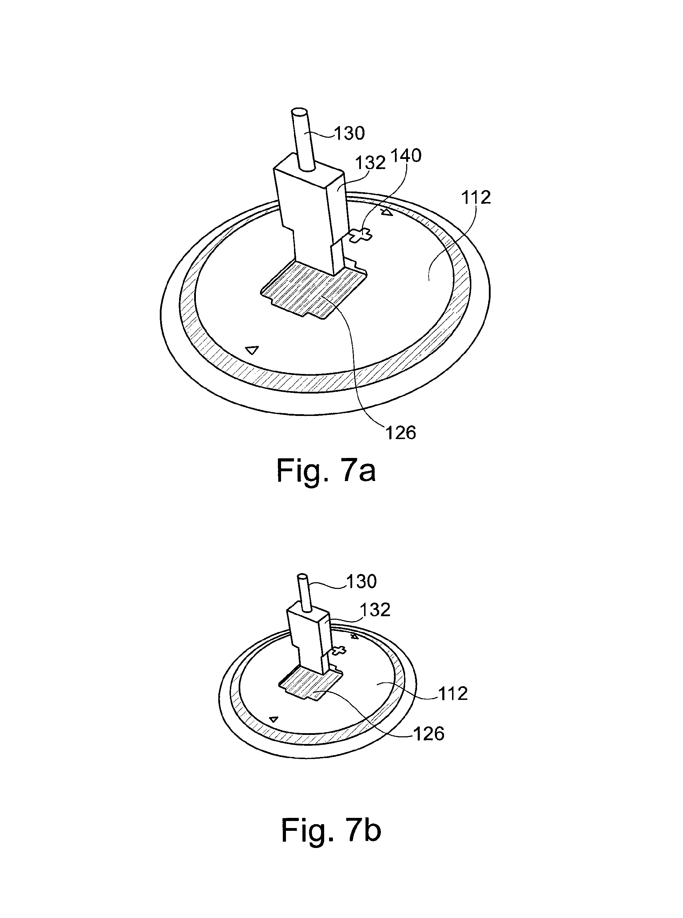

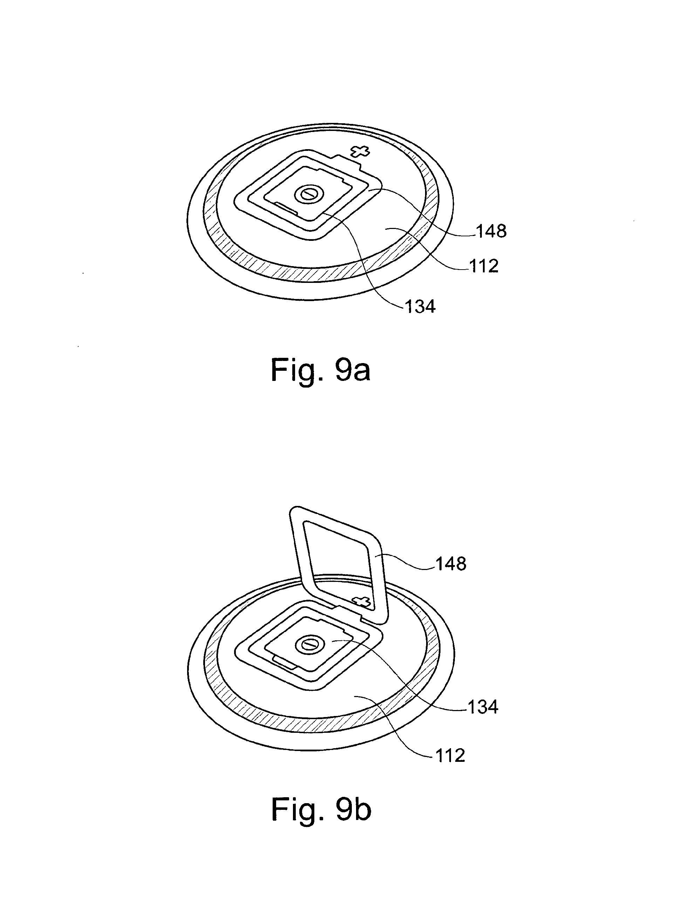

In the embodiment shown in figures 9a-b, user actuation means in the form of a handle 148 is provided to allow a user to move the assembly 110 between storage and access positions. The this can be in the form of a socket 126 which is located with respect to the face formed on the lid member 112 and which in this embodiment is in the form of a 2 port USB charger socket 126, as shown in figures 6a-10. The socket 126 is accessible to a user from the upper surface of the worktop when the assembly 110 is in both the storage and access positions.

As shown in Figures 6a-c a slidable cover 134 can be provided for the socket 126 and the same is slidably movable between a closed position, as shown in figure 6a, to an intermediate position shown in Figure 6b and then to an open position, as shown in Figure 6c. The slidable cover prevents, or at least reduces, dirt and/or moisture from entering the socket 126 when not in use. A gripping tab 136 can be provided on or associated with the cover to allow a user to move the cover between the open and closed positions if required.

Indication means can be provided on or associated with the cover 134 and/or lid member 112 to provide a visual indication to a user as to the type of power or data connection port provided. As shown in Figures 6a- a visual indication 140 is provided to inform the user that the lid member 112 contains a USB charging socket. In addition, or alternatively the lid member 112 may also include a wireless charging capability such as a magnetic resonance or inductance charging means which is housed within the lid 112 but which allows the charging electrical devices (such as mobile phones) which are located within a predefined charging range of the lid member 112. In this case the socket 126 may or may not be provided.

The lid member 112 can be convex in shape so as to protrude slightly above an upper surface of the worktop in use. Visual indication means 142 showing the required rotational direction of movement of the lid 112 by a user to release the same and handle 148 can be arranged on the lid to be moved between a substantially horizontal or relatively flat position, as shown in figure 9a, when not in use, to a substantially vertical or raised position, as shown in figure 9b.

It will be appreciated that any suitable movement mechanism can be provided on the apparatus to allow movement of the housing 110 between the storage and access positions as required and that in any position of the housing with respect to the worktop at least one power or data socket 126 and/or wireless charging means are, in this embodiment, always accessible and usable by the user, regardless of the position of the assembly 110.

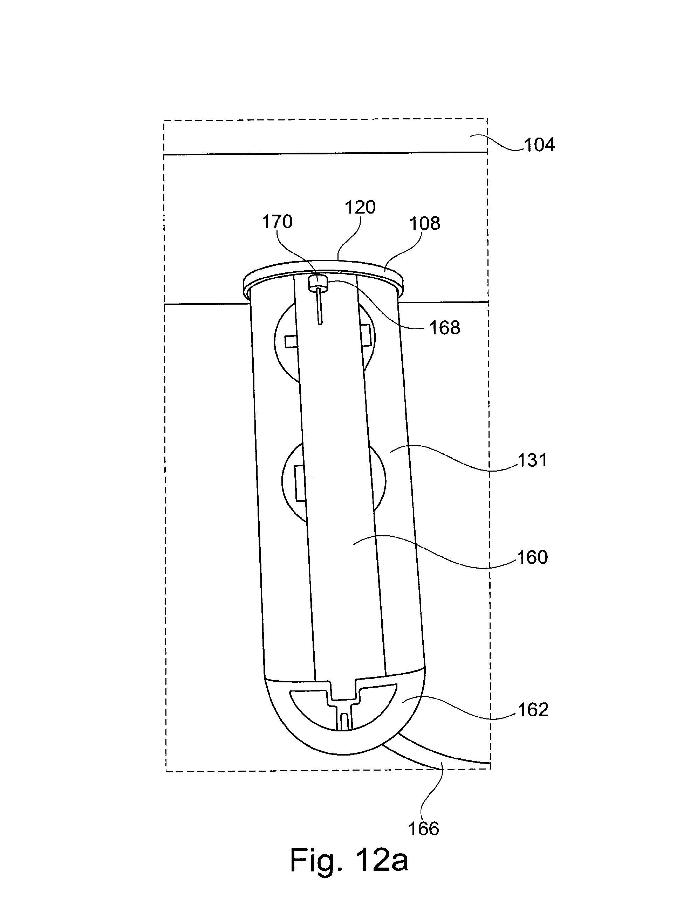

Figures 11a-c illustrate the assembly 110 in the access position and it will be seen that the connectors 126, 122,124, 127 and 128 are all available for use with only the base 162 and the power connection 166 of the movement assembly positioned under the worktop 104 of the item of furniture. To move the assembly 110 to the storage position a downward force 164 is applied to the lid 112 as indicated in Figure 11a. At this stage the spring 160 is coiled up and located within the base 162 with only the end 168 protruding to a sufficient extent so as to allow the same to be engaged with the locating frame 120 in a fixed position. As the assembly is pushed down the spring 160 uncoils to an extended position shown in Figures 12a and c and which the end 168 is still fixed to the locating frame 120 and the other end of the spring is retained within the base. In this position the parts 157 and 159 are required to engage as the spring is provided of a form such that it is biased towards the coiled condition and therefore when the parts 157,159 are released the assembly automatically moves to the access position of Figures 11a-c. In order to prevent the movement force being too violent damping means 170 are provided on the locating frame 120 and which include a pin 172 depending downwardly as shown and the free end of the pin contacts with the assembly as it is moving under the influence of the spring 160, to the access position. The damping means typically includes a resilient member in the housing 174 against which the pin moved when in contact with the part of the assembly at or adjacent to the base 162 of the assembly 110 so as to slow the movement of the assembly to it's final access position and thereby damp the movement to an acceptable speed and force. In the storage position the lid charging means, whether it be a socket or wireless charging means is still available for use.

## Claims

1. Apparatus for the provision of power and/or data cable connections, said apparatus including a power and/or data connection assembly, and a movement assembly, said movement assembly including a biasing means, having a first end connected at a fixed location with respect to which the power and/or data connection assembly is provided to be moved and a second end located with the power and/or data connection assembly and wherein, when the power and/or data connection assembly in a first position, is released from engagement means, the relative movement between the respective ends of the biasing means causes the power and/or data connection assembly to be moved from the first position to a second position.

2. Apparatus according to claim 1 wherein as the power and/or data connection assembly is moved to the first position the biasing means uncoils and the distance between the respective ends of the same increases.

3. Apparatus according to claim 1 wherein when the power and/or data connection assembly is free to move the same is automatically moved to the second position by the coiling of the biasing means and the distance between the respective ends reduces.

4. Apparatus according to claim 1 wherein the free end of the biasing means is connected to the movement assembly at a location which is intermediate the respective ends of the power and/or data connection assembly with respect to the axis along which the assembly is to be moved between the first and second positions.

5. Apparatus according to claim 1 wherein the movement of the power and/or data connection assembly between the first and second positions is a linear movement.

6. Apparatus according to claim 1 wherein the movement of the power and/or data connection assembly between the first and second positions is a pivoted movement.

7. Apparatus according to claim 1 wherein the direction of movement and form of movement is controlled by guide means between the power and/or data connection assembly and the movement assembly.

8. Apparatus according to claim 1 wherein the movement assembly is located in a fixed position with respect to a further item in the form of an item of furniture.

9. Apparatus according to claim 1 wherein the biasing means is a constant force spring or a clock spring.

10. Apparatus according to claim 1 wherein the power and/or data connection assembly includes a plurality of sockets to allow power and data connections to be made when the apparatus is in the second position.

11. Apparatus according to claim 1 wherein the apparatus is held in the first position via engagement means which are accessible by a user in order to release the same and allow the apparatus to then be moved under the force of the biasing means to the second position.

12. Apparatus according to claim 1 wherein the power and/or data connection assembly includes damping means which contact with the apparatus as the same moves between positions in order to control the speed and force of movement at least of the assembly to the second position.

13. Apparatus according to claim 1 wherein the apparatus includes an external portion which is connected to, or provided integrally with, the power and/or data connection assembly, and moves with the said assembly between the first and second positions.

14. Apparatus according to claim 13 wherein when the power and/or data connection assembly is in the first position at least one face of the external portion is accessible for use at an external surface of the item of furniture to which the apparatus is fitted.

15. Apparatus according to claim 13 wherein the said external portion has means for providing an electrical charge to one or more devices connected thereto or within a charging range thereof when the said assembly is in the first position.

16. Apparatus according to claim 15 wherein the external portion has at least one socket to allow the connection of a suitable plug, such as a USB plug to allow the charging and/or data connection of a device connected to the plug.

17. Apparatus according to claim 15 or 16 wherein the external portion is provided and connected such as to provide a wireless charging effect such as by magnetic resonance charging.

18. Apparatus according to claim 13 wherein the said face of the external portion with the power and/or data socket lies at, or adjacent to, the top surface of an item of furniture to which the apparatus is fitted, when the power and/or data connection assembly is in the first, storage position.

19. Power and/or data connection apparatus, said apparatus including an assembly, movement means allowing movement of the assembly between storage and access positions, at least one power and/or data socket located with respect to a face of the assembly and **characterised in that** at least one further power and/or data socket and/or a magnetic induction or magnetic resonance wireless charging transmitter is located with respect to a further face of the assembly so as to be accessed by the user when the housing is in both the storage and access positions.

20. Apparatus according to claim 19 wherein the assembly is moveable between the storage and access positions along a substantially linear axis.

21. Apparatus according to claim 19 wherein one or more power and/or data connection sockets are arranged along a side face of the housing so as to be accessible to a user when the housing is in the access position and one or more further data and/or power sockets and/or a magnetic induction or magnetic resonance wireless charging transmitter is located with respect to a different face of the housing so as to always be accessible to the user.

22. Apparatus according to claim 19 wherein actuation means for allowing user actuation of the movement means is provided on the lid or top member in addition to the further power and/or data socket.

23. Power and/or data connection apparatus for location with a worktop of an item of furniture, said apparatus including an assembly having power and/or data connection sockets located along a first face thereof and at least one further power and/or data connection means and/or wireless charging transmitter located on a second face of the assembly, said assembly movable between a first, storage, position and a second, access position, such that the power and/or data sockets located on the first face of the assembly are located substantially internally of the item of furniture when the assembly is in the storage position and externally of the item of furniture when the assembly is in the access position and **characterised in that** the further power and/or data connection means and/ or wireless charging transmitter located on the second face of the housing are accessible from externally of the item of furniture when the housing is in both the storage and access positions.
